# EUROPEAN PATENT APPLICATION

(11) **EP 2 328 215 A2**
(43) Date of publication of application: **01.06.2011**
(21) Application number: 09816343.9
(22) Date of filing: 27.07.2009
(51) Int. Cl.: H01M 4/48

(54) **NEGATIVE ACTIVE MATERIAL FOR A LITHIUM SECONDARY BATTERY, METHOD FOR MANUFACTURING SAME, AND LITHIUM SECONDARY BATTERY COMPRISING SAME**

(30) Priority: 23.09.2008 KR 20080093434
(71) Applicant: Korea Basic Science Institute, Daejeon 305-333 (KR)
(72) Inventor: KIM, Yang Soo, Suncheon-si Jeollanam-do 540-080 (KR); JEONG, Euh Duck, Changwon-si Gyeongsangnam-do 641-010 (KR); KIM, Hae Jin, Daejeon 305-755 (KR); KIM, Young Min, Daejeon 305-759 (KR); BAE, Jong Seong, Busan 612-846 (KR); HONG, Kyong Soo, Busan 609-312 (KR); KIM, Hee Jin, Jindo-gun Jeollanam-do 539-803 (KR); BAE, Kyeong Seo, Suncheon-si Jeollanam-do 540-160 (KR)
(74) Representative: Schwabe - Sandmair - Marx
(86) International application number: PCT/KR2009/004157
(87) International publication number: WO 2010/035950

(57) **Abstract**

This invention relates to a negative active material for a lithium secondary battery, a method of preparing the same and a lithium secondary battery including the same. This negative active material exhibits high capacity and superior cycle-life characteristics and is thus usefully employed in a lithium secondary battery which shows high capacity during high-rate charge · discharge.

## Description

### [Technical Field]

The present invention relates to a negative active material for a lithium secondary battery, a method of preparing the same, and a lithium secondary battery including the same.

### [Background Art]

Lithium secondary batteries which are recently receiving attention as a power source of portable small electronic devices use an organic electrolyte and thus exhibit a discharge voltage two or more times higher than conventional batteries using an alkali aqueous solution, thereby ensuring high energy density.

In lithium secondary batteries, the positive active materials used mainly include a lithium-transition metal oxide, which has a structure that enables the intercalation of lithium, such as LiCoO₂, LiMn₂O₄, LiNi₁₋ₓCOₓO₂ (0<x<1), etc.

In lithium secondary batteries, the negative active materials used include a variety of carbonaceous materials, including artificial graphite, natural graphite and hard carbon, enabling the intercalation and deintercalation of lithium. Among the carbonaceous materials, graphite such as artificial graphite or natural graphite has a low discharge voltage of -0.2 V compared to lithium, and thus provides an advantage in terms of energy density of a lithium battery because a battery using graphite as a negative active material represents a high discharge voltage of 3.6 V. Furthermore, graphite ensures that a lithium secondary battery has a long cycle-life thanks to excellent reversibility thereof. For this reason, graphite is utilized extensively. However, the case where a substrate is fabricated using graphite as an active material is problematic because the density of the substrate is lowered, undesirably diminishing capacity in terms of energy density per unit volume of the substrate. Furthermore, a side reaction between graphite and an organic electrolyte may easily take place at high discharge voltages, and thus there is the danger of a fire breaking out or an explosion attributable to mis-operation and overcharging of the battery.

In order to solve such problems, an oxide has recently been being developed as a negative active material. For example, amorphous tin oxide developed by Fujifilm manifests a high capacity per weight of 800 mAh/g. However, tin oxide is problematic because an initial irreversible capacity amounts to about 50%, and also because a portion of tin oxide is reduced from the oxide into tin metal via charge · discharge, making it more and more difficult to apply it to batteries.

In addition, research is ongoing into using lithium metal-oxides as the negative active material in a lithium secondary battery. Particularly, a lithium-transition metal oxide may form a spinel or layered network structure to thus facilitate the deintercalation · intercalation of lithium ions, and thereby is being utilized as an effective negative active material. For example, Japanese Unexamined Patent Publication No. 2002-216753 discloses LiₐMg_{b}VO_{c} (0.05≤a≤3, 0.12≤b≤2, 2≤2c-a-2b≤5) as a negative active material, and also the negative electrode characteristics of a lithium secondary battery including Li_{1.1}V_{0.9}O₂ are published in the 2002 Japanese Battery Conference (Preview No. 3B05).

However, oxide negative electrodes having satisfactory performance have not yet been introduced, and research into them is ongoing.

### [Disclosure]

### [Technical Problem]

The present inventors have studied negative active materials for lithium secondary batteries that have high capacity and superior cycle-life characteristics and then discovered the fact that the Co of a lithium-transition metal oxide such as LiCoO₂ used as a conventional positive active material may be substituted by another first metal element Nb and another second metal element M, thus producing a lithium-metal oxide that facilitates the deintercalation · intercalation of a lithium ion, which is then used as a negative active material for a lithium secondary battery, in which this negative active material exhibits high capacity and superior cycle-life characteristics, thereby completing the present invention.

### [Technical Solution]

The present invention is intended to provide a negative active material for a lithium secondary battery having high capacity and superior cycle-life characteristics, a method of preparing the same, and a lithium secondary battery including the same.

### [Brief Description of Drawings]

FIG. 1 is a schematic view showing a structure of a negative active material LiNbO₂;
FIG. 2 is a schematic view showing the change in the structure of LiNbO₂ in which at least 1 mol lithium is intercalated;
FIG. 3 is a schematic cross-sectional view showing a lithium secondary battery according to the present invention;
FIG. 4 is a view showing results of XRD of the negative active material according to an embodiment (Example 1) of the present invention;
FIG. 5 is a view showing results of XRD of the negative active material according to an embodiment (Example 2) of the present invention;
FIG. 6 is a view showing results of XRD of the negative active material according to an embodiment (Example 3) of the present invention;
FIG. 7 is a view showing results of XRD of the negative active material according to an embodiment (Example 4) of the present invention;
FIG. 8 is a view showing results of XRD of the negative active material according to an embodiment (Example 5) of the present invention;
FIG. 9 is a view showing results of XRD of the negative active material according to an embodiment (Comparative Example 1) of the present invention;
FIG. 10 is a view showing results of XRD of the negative active material of Example 1 having intercalated lithium after charge; and
FIG. 11 is a view showing results of XRD of the negative active material of Example 2 having intercalated lithium after charge.

### [Best Mode]

The present invention provides a negative active material for a lithium secondary battery, including a compound represented by Formula 1 below.

[Formula 1] Li₁₊ₓNb_{1-x-y}M_{y}O_{2+z}

In Formula 1, 0.01≤x≤0.5, 0≤y≤0.3, -0.2≤z≤0.2, and M is an element selected from the group consisting of V, Cr, Fe, Co, Ni, Cu, Zn, Zr, Mo, W, Ag, Sn, Ge, Si, A1, and combinations thereof.

In addition, the present invention provides a method of preparing the negative active material for a lithium secondary battery of Formula 1, including 1) solid-phase mixing a lithium material, an Nb material and an M material thus preparing a mixture and 2) thermally treating the mixture in a reducing atmosphere.

In addition, the present invention provides a method of preparing the negative active material for a lithium secondary battery of Formula 1, including 1) solid-phase mixing a lithium material with an Nb material, performing primary thermal treatment in a reducing atmosphere, and then performing cooling to room temperature, thus preparing a mixture, and 2) solid-phase mixing the mixture with an M material, and performing secondary thermal treatment in a reducing atmosphere.

In addition, the present invention provides a lithium secondary battery, including a positive electrode including a positive active material able to intercalate and deintercalate a lithium ion, a negative electrode including the negative active material including the compound of Formula 1, and an electrolyte.

Hereinafter, a detailed description will be given of the present invention.

The negative active material represented by Formula 1 according to the present invention is a lithium-metal oxide in which it is easy to deintercalate · intercalate a lithium ion by substituting the Co of a lithium-transition metal oxide such as LickoO2 used as a conventional positive active material by another first element Nb and another second element M.

The negative active material represented by Formula 1 has higher density than that of a conventional graphite active material and thus may increase energy density per volume, and also has smaller changes in volume depending on deintercalation · intercalation of a lithium ion compared to conventional metal or alloy based active materials.

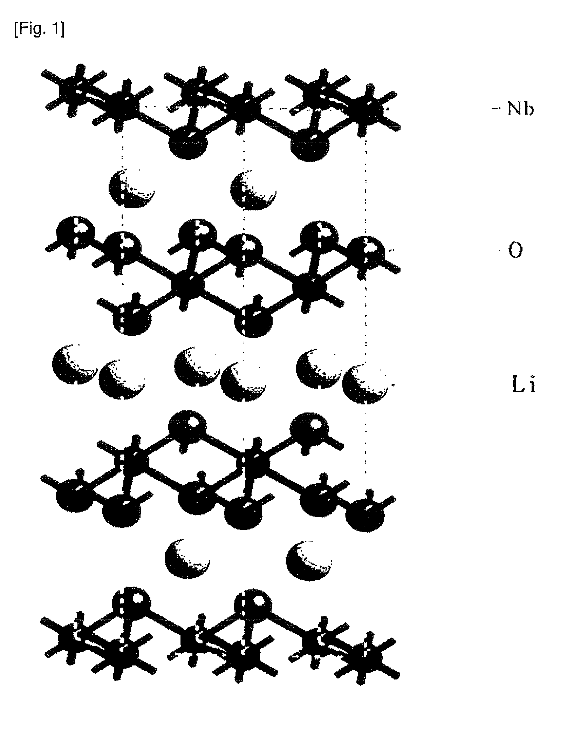

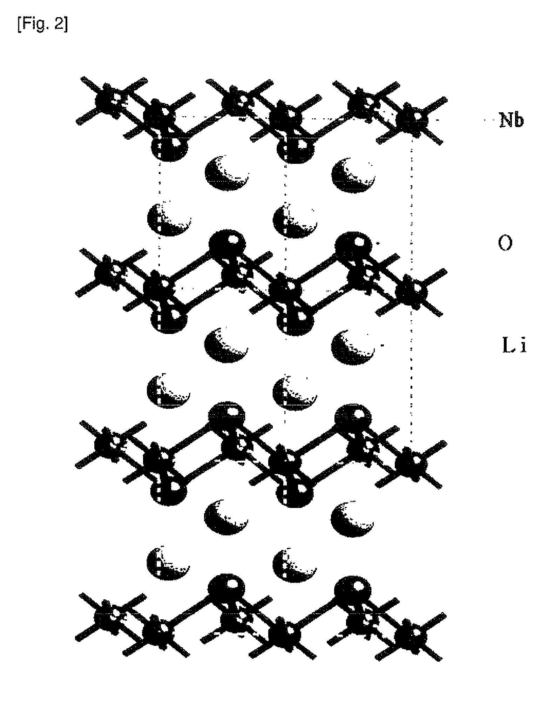

In the case of LiCoO₂ or LiNiO₂ having an R-3m structure useful as a conventional positive active material, it is utilized as a rocking chair type electrode material of a lithium secondary battery because oxygen, lithium and a transition metal form an interlayer structure and a portion of the lithium layer is deintercalated · intercalated. By the R-3m structure, it is meant that lithium and oxygen, and a transition metal element and oxygen are alternately layered. For examples, the structure of LiNbO₂ is illustrated in FIG. 1. When at least 1 mol lithium is intercalated in the structure of LiNbO₂, the reversible change that results in the structure as shown in FIG. 2 is observed (such a structural change is also reported in the case of LiNiO₂). Even when a portion of the transition metal (Nb) in LiNbO₂ is substituted by Li to thus enrich Li and a portion thereof is further substituted by another transition metal (Mn, Mo, Cr, Al), the reversible intercalation/deintercalation of lithium as shown in FIGS. 1 and 2 may be observed.

Specifically, Nb metal ions (wherein Li and a second metal have been substituted for) are placed between oxygen ions which form a hexagonal closed packing structure, namely, in the octahedral site of oxygen ions, and Li ions are placed as a single layer thereunder. Furthermore, Li is intercalated, thus forming the structure of Li₂NbO₂. As such, Li ions are present as a double layer under the octahedral site of oxygen. Thus, the structure of Li₂NbO₂ is changed into a structure in which the layer of Nb metal ions (wherein Li and a second metal have been substituted for) is placed first, then the layer of oxygen ions is placed, the Li layer is then positioned as a double layer as shown in FIG. 2, and the oxygen layer is then placed, and the layer of Nb metal ions (wherein Li and a second metal have been substituted for) is then laid out again.

In the present invention, in order to achieve efficient deintercalation · intercalation of lithium at low potential, portions of the Nb layer are substituted by another metal and Li, so that a lattice constant, namely, a distance between the axes a, may increase. Accordingly, as shown in FIG. 1, the Li layer becomes wider, whereby the intercalation/deintercalation of lithium is made easy in the crystal structure where lithium is intercalated. When lithium is easily intercalated/deintercalated in this way, a lithium diffusion speed may increase during charge · discharge, thus improving the cycle-life and high rate characteristics.

The negative active material for a lithium secondary battery according to the present invention includes the compound of Formula 1 having a composition optimal for efficiently deintercalating · intercalating lithium at low potential by the use of the change in lattice structure as detailed above. In the compound of Formula 1, the average oxidation number of metal Nb is in the range of from +3 to +5, preferably from +3 to +4, and thus the redox reaction occurs in the range of from +3 to +5. Hence, this negative active material has a redox potential of 1 V or less preferably 0.01 ∼ 1 V compared to lithium metal. Although vanadium oxide used as a conventional positive active material has an oxidation number ranging from +3 to +4 or +4 to +5 and thus exhibits an initial redox potential of 2 V or more compared to lithium metal, the negative active material according to the present invention is advantageous because it has the potential of 1 V or less and thus the redox reaction is possible at very low potential. Hence, when the compound of Formula 1 is used as a negative active material, high battery discharge voltage may be anticipated.

In the compound of Formula 1, if x, y and z fall outside the above ranges or if the structure is different from that of the present invention, the redox pair of Nb may adopt +3 to +4 or +3 to +5, and thus the average potential compared to lithium metal may be 1.0 V or more, which is evaluated to be too high. In this case, the above compound is inappropriate for use as a negative active material because the discharge voltage of a battery is remarkably decreased.

The negative active material according to the present invention has a distance ratio (c/a axis ratio) between crystal axes before intercalation of lithium ions (R-3m) ranging from 2.5 to 6.5, preferably from 3.0 to 6.2. If the distance ratio (c/a axis ratio) between crystal axes before lithium intercalation falls outside the above range, the intercalation and deintercalation of lithium ions become structurally difficult, and the potential of intercalation/deintercalation of lithium ions is increased to 0.6 V or more, and hysteris may occur in which a difference in potential between intercalation and deintercalation is increased depending on the contribution of oxygen anions to the reaction.

Also, in the negative active material according to the present invention, the distance ratio between crystal axes after intercalation of lithium ions (P-3ml) is 0.3 ∼ 3.0, preferably 1.0 ∼ 3.0. If the distance ratio of crystal axes is less than 0.3, changes in lattice due to the intercalated Li are small, which makes it difficult to diffuse Li into the lattice. In contrast, if the above distance ratio exceeds 3.0, it is difficult to maintain the crystal structure.

In the negative active material according to the present invention, the lattice volume may change in the range of 30% or less, preferably from more than 0% to 27% or less, depending on the intercalation/deintercalation of lithium ions. If the crystal lattice volume exceeds 30%, the substrate may crack due to changes in volume, thereby causing the conductive pathway to short out and incurring the separation of the active material itself from the substrate and the aggregation thereof with peripheral particles, undesirably resulting in considerably deteriorated battery characteristics including increased internal resistance, lowered capacity and shortened cycle-life.

The negative active material according to the present invention enables constant-current/constant-voltage charge. That is, constant-current and constant-voltage charge is performed by a conventional carbon (graphite) active material, thus exhibiting capacity. However, in the case of a metal or metal/graphite composite that has recently been studied as a high-capacity active material, because the lithium intercalation/deintercalation mechanism of the metal is different from that of graphite, the use of a constant voltage may generate problems in which the structure may be broken by the intercalation of lithium, undesirably causing deterioration, or in which lithium does not diffuse into the crystal structure but is deposited onto the surface, resulting in poor reversibility and safety. Unfortunately, conventional metal or metal/graphite composite negative active materials are unable to constant-voltage charge under the same conditions as those of a conventional graphite negative active material, making it impossible to actually use them in a battery. Whereas, the novel negative active material according to the present invention is able to constant-current/constant-voltage charge and thus can be usefully employed in batteries.

Also, the negative active material according to the present invention has a theoretical energy density per unit volume of 4.2 g/cc, and thus a substrate density of about 3.0 g/cc may be obtained upon actual manufacturing of a substrate. Furthermore, under conditions of a capacity per unit weight of 300 mAh/g, a theoretical capacity per unit volume is 1200 mAh/cc or more and an actual capacity may be obtained as an energy density of 900 mAh/cc or more. On the other hand, in the case where graphite is used as a conventional negative active material, a theoretical energy density per unit volume is 2.0 g/cc, an actual energy density is 1.6 g/cc, and under conditions of a capacity per unit weight of 360 mAh/g, an actual capacity per unit volume is 570 mAh/cc. Therefore, when the negative active material according to the present invention is used, the energy density may increase at least two times, and thus safety with an organic electrolyte may become superior, compared to when using the carbonaceous negative active material.

The negative active material according to the present invention may be prepared by solid-phase mixing a lithium material, an Nb material, and an M material thus preparing a mixture, which is then thermally treated in a reducing atmosphere.

Also, the negative active material according to the present invention may be prepared by solid-phase mixing a lithium material with an Nb material, performing primary thermal treatment in a reducing atmosphere and then performing cooling to room temperature, thus preparing a mixture, solid-phase mixing the mixture with an M material, and performing secondary thermal treatment in a reducing atmosphere.

The mixing ratio of lithium material, Nb material, and M material may be appropriately adjusted in the range in which a desired composition of the compound of Formula 1 is obtained.

The lithium material may be selected from the group consisting of lithium carbonate, lithium hydroxide, lithium nitrate, lithium acetate, and combinations thereof.

The Nb material may be selected from the group consisting of Nb, oxides and hydroxides including the same, and combinations thereof. Specific examples thereof include but are not limited to Nb₂O₃, Nb₂O₅, etc.

The M material may be selected from the group consisting of a metal selected from among V, Cr, Mn, Fe, Co, Ni, Cu, Zn, Zr, Mo, W, Ag, Sn, Ge, Si, Al, and combinations thereof; oxides and hydroxides including the same; and combinations thereof. Specific examples thereof include but are not limited to Gr₂O₃, MoO₃, WO₃, ZrO₂, VO, V₂O₃, V₂O₄, V₂O₅, V₄O₇, VOSO₄ · nH₂O and NH₄VO₃.

The thermal treatment may be carried out at 300 ∼ 1400°C, preferably 700 ∼ 1200°C. In particular, primary thermal treatment may be performed at 700 ∼ 900°C, and secondary thermal treatment may be performed at 700 ∼ 1400°C. If the thermal treatment temperature falls outside the above temperature range, an impurity phase may be formed, undesirably deteriorating capacity and cycle-life.

Furthermore, the thermal treatment is preferably performed in a reducing atmosphere. The reducing atmosphere may be selected from the group consisting of a hydrogen atmosphere, a nitrogen atmosphere, an argon atmosphere, N₂/H₂ mixture gas atmosphere, a CO/CO₂ mixture gas atmosphere, a helium atmosphere, and combinations thereof.

The negative active material thus prepared includes the compound of Formula 1 having superior capacity per unit volume, thereby ensuring superior capacity and improving initial battery efficiency and cycle-life characteristics.

In addition, the present invention provides a lithium secondary battery including a positive electrode including a positive active material able to intercalate and deintercalate a lithium ion, a negative electrode including a negative active material having the compound of Formula 1, and an electrolyte.

The lithium secondary battery may be classified, depending on the type of separator and electrolyte, into a lithium ion battery, a lithium ion polymer battery, and a lithium polymer battery, and depending on the shape thereof, into a cylindrical battery, a rectangular battery, a coin-shaped battery, and a pouch-shaped battery, and depending on the size thereof, into a bulk type battery and a thin film type battery. The structure and manufacturing method of these batteries are widely known in the art, and a specific description thereof has been omitted.

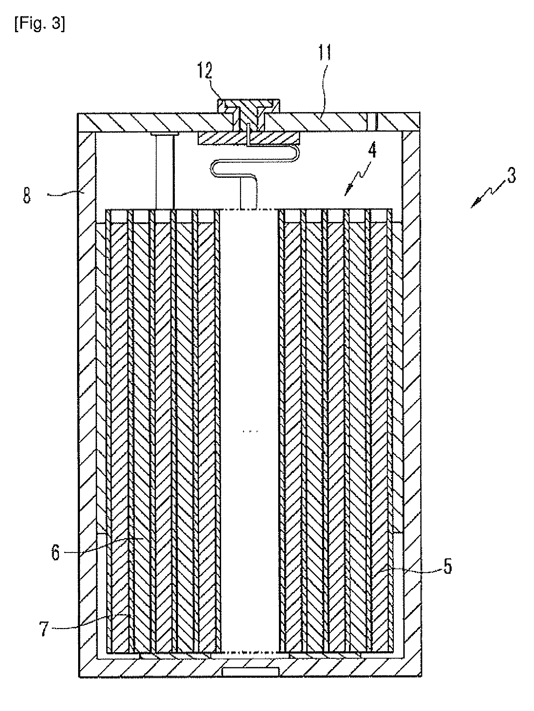

The schematic cross-sectional view of the lithium secondary battery according to the present invention is shown in FIG. 3. With reference to FIG. 3, the process of manufacturing the lithium secondary battery is described below.

First, an electrode assembly 4 including a positive electrode 5, a negative electrode 6 and a separator 7 between the positive electrode 5 and the negative electrode 6 is disposed in a case 8, after which an electrolyte is fed into the upper portion of the case 8, and the case is sealed with a cap plate 11 and a gasket 12 and assembled, thus manufacturing the lithium secondary battery 3.

The negative electrode 6 includes a collector and a negative active material layer formed on the collector, and the negative active material layer includes a negative active material. The negative active material may be contained in an amount of 1 ∼ 99 wt%, preferably 10 - 98 wt%, based on the total weight of the negative active material layer. If the amount thereof falls outside the above range, the capacity or relative binder amount may decrease, undesirably weakening the bondability with the collector.

The negative electrode may be manufactured by mixing the negative active material, a binder and an optional conductive material in a solvent, thus preparing a composition for a negative active material layer, and applying the composition on a negative current collector such as copper. This electrode manufacturing method is widely known in the art, and its specific description has been omitted.

Examples of the binder include but are not limited to polyvinyl alcohol, carboxymethylcellulose, hydroxypropylenecellulose, diacetylenecellulose, polyvinyl chloride, polyvinylpyrrolidone, polytetrafluoroethylene, polyvinylidene fluoride, polyethylene, and polypropylene.

The conductive material may include any material as long as it does not cause chemical changes in the battery and is electrically conductive. Examples thereof include natural graphite, artificial graphite, carbon black, acetylene black, ketjen black, carbon fiber, metal powder or metal fiber, including copper, nickel, aluminum or silver, etc., and may be used in a mixture with a conductive material such as a polyphenylene derivative or the like.

The solvent includes N-methylpyrrolidone, but is not limited thereto.

The collector may be selected from the group consisting of copper foil, nickel foil, stainless steel foil, titanium foil, nickel foam, copper foam, a conductive metal-coated polymer substrate, and combinations thereof.

The positive electrode 5 includes a positive active material, and the positive active material may be a lithiated intercalation compound that enables the reversible intercalation and deintercalation of lithium. Specifically, one or more of composite oxides of lithium and a metal selected from the group consisting of cobalt, manganese, nickel, and combinations thereof may be used.

Like the negative electrode, the positive electrode may be manufactured by mixing the positive active material, a binder, and an optional conductive material in a solvent, thus preparing a composition for forming the positive active material layer, and applying the composition on a positive current collector such as aluminum.

The electrolyte loaded in the lithium secondary battery may include a non-aqueous electrolyte or a known solid electrolyte.

The non-aqueous electrolyte may be one resulting from dissolving a lithium salt in a non-aqueous organic solvent.

The lithium salt acts as a supply source of lithium ions in the battery thus basically operating a lithium secondary battery. The lithium salt may be selected from the group consisting of LiPF₆, LiBF₄, LiSbF₆, LiAsF₆, LiClO₄, LiCF₃SO₃, LiC₄F₉SO₃, LiN(CF₃SO₂)₂, LiN(C₂FsSO₂)₂, LiAlO₄, LiAlCl₄, LiN(CₚF₂ₚ₊₁SO₂)(C_{q}F_{2q+1}SO₂) (wherein p and q are a natural number), LiSO₃CF₃, LiCl, LiI, and combinations thereof. The lithium salt may be used in a concentration ranging from 0.6 M to 2.0 M, preferably from 0.7 M to 1.6 M. If the concentration of lithium salt is less than 0.6 M, the viscosity of the electrolyte may decrease, undesirably deteriorating the performance of the electrolyte. In contrast, if the concentration thereof exceeds 2.0 M, the viscosity of the electrolyte may increase, undesirably lowering the mobility of lithium ions.

The non-aqueous organic solvent functions as a medium able to move ions that participate in the electrochemical reaction of the battery. The non-aqueous organic solvent may include carbonate-, ester-, ether-, ketone-, alcohol-based solvents or aprotic solvents. Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylmethyl carbonate (EMC), ethylene carbonate (EC), propylene carbonate (PC), and butylene carbonate (BC). Examples of the ester-based solvent may include n-methyl acetate, n-ethyl acetate, n-propyl acetate, dimethylacetate, methylpropionate, ethylpropionate, γ-butyrolactone, decanolide, valerolactone, mevalonolactone, and caprolactone. Examples of the ether-based solvent may include dibutyl ether, tetraglyme, diglyme, dimethoxyethane, 2-methyltetrahydrofuran, and tetrahydrofuran. Examples of the ketone-based solvent include cyclohexanone. Examples of the alcohol-based solvent include ethylalcohol and isopropyl alcohol. Examples of the aprotic solvent includes nitriles such as X-CN (wherein X is a C2∼C20 linear, branched or cyclic hydrocarbon group, and may contain a double-bond aromatic ring or ether bond); amides such as dimethylformamide; dioxolanes such as 1,3-dioxolane; and sulfolanes. The non-aqueous organic solvent may be used alone or in mixtures of one or more. The mixing ratio of the mixture of one or more may be appropriately adjusted depending on the desired battery performance, which will be widely understood to those skilled in the art. In the case of the carbonate-based solvent, a mixture of cyclic carbonate and chain carbonate is preferably used. In this case, the cyclic carbonate and the chain carbonate may be mixed at a volume ratio of 1:1 ∼ 1:9 in order to exhibit superior electrolyte performance.

The non-aqueous organic solvent may further include an aromatic hydrocarbon-based organic solvent in addition to the carbonate-based solvent. The carbonate-based solvent and the aromatic hydrocarbon-based organic solvent may be mixed at a volume ratio of 1:1 to 30:1.

The aromatic hydrocarbon-based organic solvent may include an aromatic hydrocarbon-based compound represented by Formula 2 below.

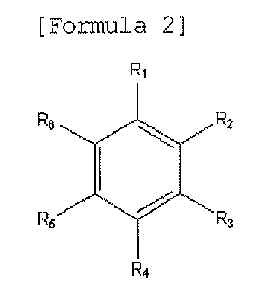

In Formula 2, R₁ to R₆ are each independently selected from the group consisting of hydrogen, halogen, C₁∼C₁₀ alkyl, halo-C₁∼C₁₀ alkyl, and combinations thereof.

Preferably, the aromatic hydrocarbon-based organic solvent is selected from the group consisting of benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodabenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and combinations thereof.

The non-aqueous electrolyte may further include an additive such as an overcharge inhibitor including ethylenecarbonate, pyrocarbonate, etc.

The solid electrolyte may include a polyethylene oxide polymer electrolyte or a polymer electrolyte containing one or more polyorganosiloxane side-chains or polyoxyalkylene side-chains; a sulfide electrolyte such as Li₂S-SiS₂, Li₂S-GeS₂, Li₂S-P₂S₅, and Li₂S-B₂S₃; and an inorganic electrolyte such as Li₂S-SiS₂-Li₃PO₄, and Li₂S-SiS₂-Li₃SO₄.

Depending on the type of lithium secondary battery, there may be a separator provided between the positive electrode and the negative electrode. Such a separator may include polyethylene, polypropylene, polyvinylidene fluoride, a multilayer of two or more layers thereof, or a mixture multilayer including a polyethylene/polypropylene two-layered separator, a polyethylene/polypropylene/polyethylene three-layered separator, a polypropylene/polyethylene/polypropylene three-layered separator, or the like.

### [Mode for Invention]

A better understanding of the present invention is furnished by the following examples which are set forth to illustrate, but are not to be construed as limiting the present invention.

### Examples 1 ∼ 5 and Comparative Example 1: Preparation of Negative Active Material for Lithium Secondary Battery

### Example 1: Preparation of Li_{1.1}Nb_{0.9}O₂

Li₂CO₃ and Nb₂O₃ were solid-phase mixed so that the molar ratio of Li:Nb was 1.1:0.9. This mixture was thermally treated at 1050°C in a hydrogen atmosphere and then cooled to room temperature, thus preparing Li_{1.1}Nb_{0.9}O₂ as a negative active material for a lithium secondary battery.

### Example 2: Preparation of Li_{1.1}Nb_{0.89}V_{0.01}O₂

Li₂CO₃, Nb₂O₃ and V₂O₄ were solid-phase mixed so that the molar ratio of Li:Nb:V was 1.1:0.89:0.01. This mixture was thermally treated at 1050°C in a hydrogen atmosphere and then cooled to room temperature, thus preparing Li_{1.1}Nb_{0.89}V_{0.01}O₂ as a negative active material for a lithium secondary battery.

### Example 3: Preparation of Li_{1.1}Nb_{0.89}Al_{0.01}O₂

Li₂CO₃, Nb₂O₃ and Al₂O₃ were solid-phase mixed so that the molar ratio of Li:Nb:A1 was 1.1:0.89:0.01. This mixture was thermally treated at 1050°C in a hydrogen atmosphere and then cooled to room temperature, thus preparing Li_{1.1}Nb_{0.89}Al_{0.01}O₂ as a negative active material for a lithium secondary battery.

### Examples 3-1: Another Preparation of Li_{1.1}Nb_{0.89}Al_{0.01}O₂

Li₂CO₃ and Nb₂O₅ were solid-phase mixed so that the molar ratio of Li:Nb was 3:1. This mixture was thermally treated at 800°C in a nitrogen atmosphere or an air atmosphere and then cooled to room temperature, thus preparing Li₃NbO₄. Then, Li₃NbO₄, NbO and Al₂O₃ were thermally treated at 1050°C in a hydrogen atmosphere at a molar ratio of 1.1:1.573:0.0135, thus preparing Li_{1.1}Nb_{0.89}Al_{0.01}O₂ as a negative active material for a lithium secondary battery.

### Example 4: Preparation of Li_{1.1}Nb_{0.89}Cr_{0.10}O₂

Li₂CO₃, Nb₂O₃ and Cr₂O₃ were solid-phase mixed so that the molar ratio of Li:Nb:Cr was 1.1:0.89:0.01. This mixture was thermally treated at 1050°C in a hydrogen atmosphere and then cooled to room temperature, thus preparing Li_{1.1}Nb_{0.89}Cr_{0.01}O₂ as a negative active material for a lithium secondary battery.

### Example 4-1: Another Preparation of Li_{1.1}Nb_{0.89}Cr_{0.01}O₂

Li₂CO₃ and Nb₂O₅ were solid-phase mixed so that the molar ratio of Li:Nb was 3:1. This mixture was thermally treated at 800°C in a nitrogen atmosphere or an air atmosphere and then cooled to room temperature, thus preparing Li₃NbO₄. Then, Li₃NbO₄, NbO and Cr₂O₃ were thermally treated at 1050°C in a hydrogen atmosphere at a molar ratio of 1.1:1.573:0.0135, thus preparing Li_{1.1}Nb_{0.89}Cr_{0.01}O₂ as a negative active material for a lithium secondary battery.

### Example 5: Preparation of Li_{1.1}Nb_{0.89}Fe_{0.01}O₂

Li₂CO₃, Nb₂O₃ and Fe₂O₃ were solid-phase mixed so that the molar ratio of Li:Nb:Fe was 1.1:0.89:0.01. This mixture was thermally treated at 1050°C in a hydrogen atmosphere and then cooled to room temperature, thus preparing Li_{1.1}Nb_{0.89}Fe_{0.01}O₂ as a negative active material for a lithium secondary battery.

### Example 5-1: Another Preparation of Li_{1.1}Nb_{0.89}Fe_{0.01}O₂

Li₂CO₃ and Nb₂O₅ were solid-phase mixed so that the molar ratio of Li:Nb was 3:1. This mixture was thermally treated at 800°C in a nitrogen atmosphere or an air atmosphere and then cooled to room temperature, thus preparing Li₃NbO₄. Then, Li₃NbO₄, NbO and Fe₂O₃ were thermally treated at 1050°C in a hydrogen atmosphere at a molar ratio of 1.1:1.573:0.0135, thus preparing Li_{1.1}Nb_{0.89}Fe_{0.01}O₂ as a negative active material for a lithium secondary battery.

### Comparative Example 1:

Li₂CO₃ and V₂O₄ were solid-phase mixed so that the molar ratio of Li:V was 1.1:0.9. This mixture was thermally treated at 1050°C in a hydrogen atmosphere and then cooled to room temperature, thus preparing Li_{1.1}V_{0.9}O₂ as a negative active material for a lithium secondary battery.

### Comparative Example 2:

Graphite was used as a negative active material.

### Test Example 1: Analysis of Structure of Negative Active Material - X-ray Diffraction Pattern

In order to analyze the structures of the negative active materials of Examples 1 ∼ 5 and Comparative Example 1, an X-ray diffraction pattern (Philips X'pert MPD) was taken and measured.

The X-ray diffraction analysis was carried out under conditions of scan rate of 0.02°/sec exposure in 2θ range of 10 - 80° using X-rays (1. 418 Å, 40 kV/30 mA) of CuKα.

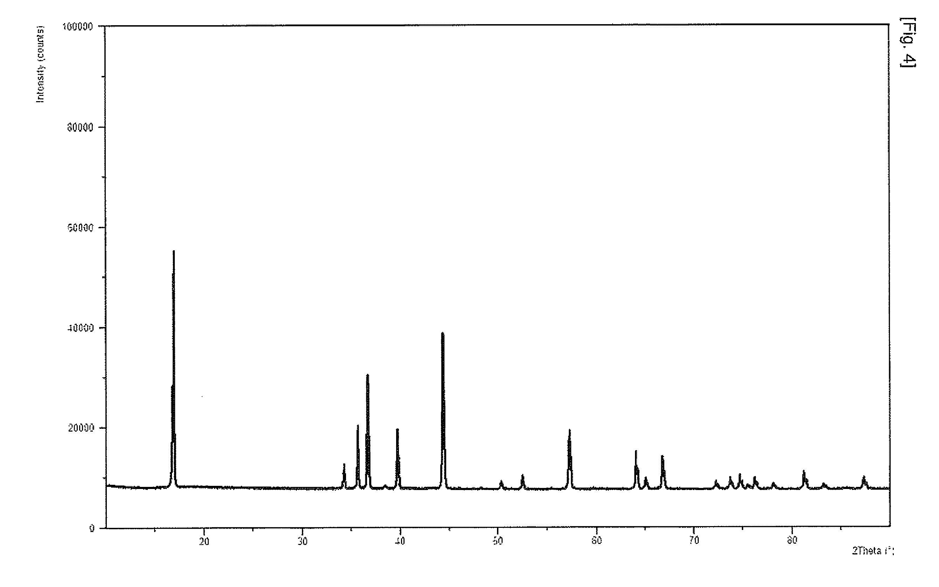

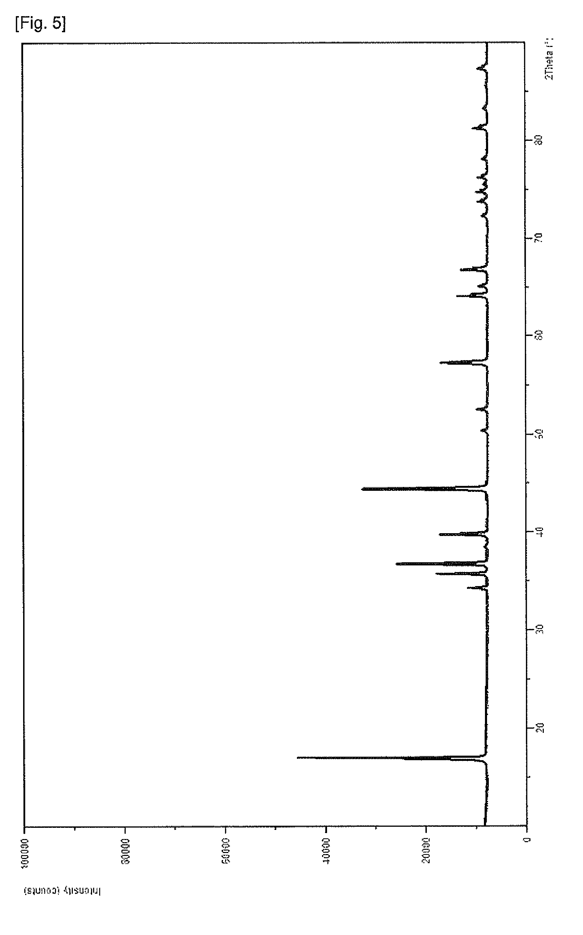

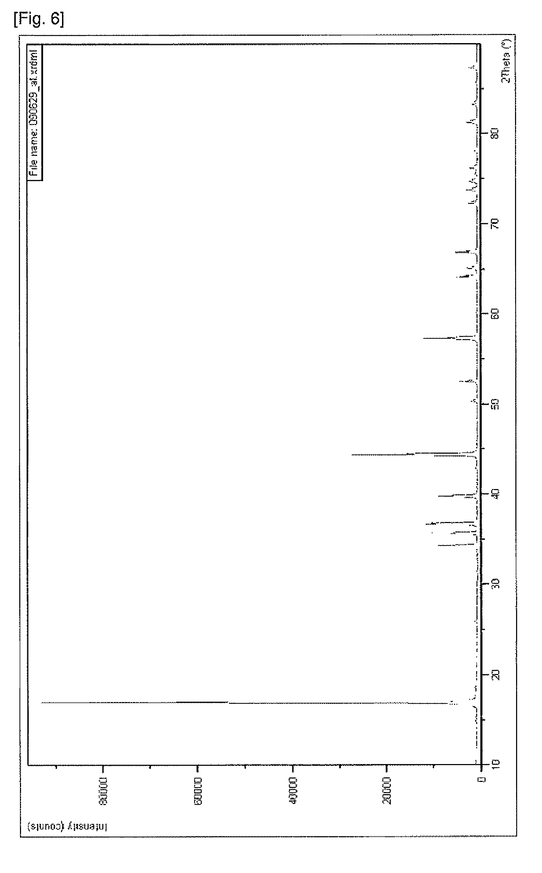

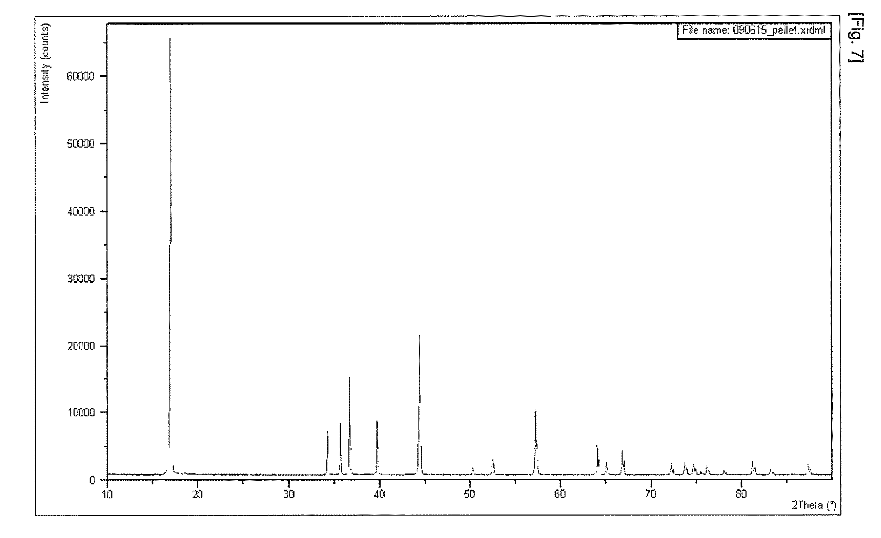

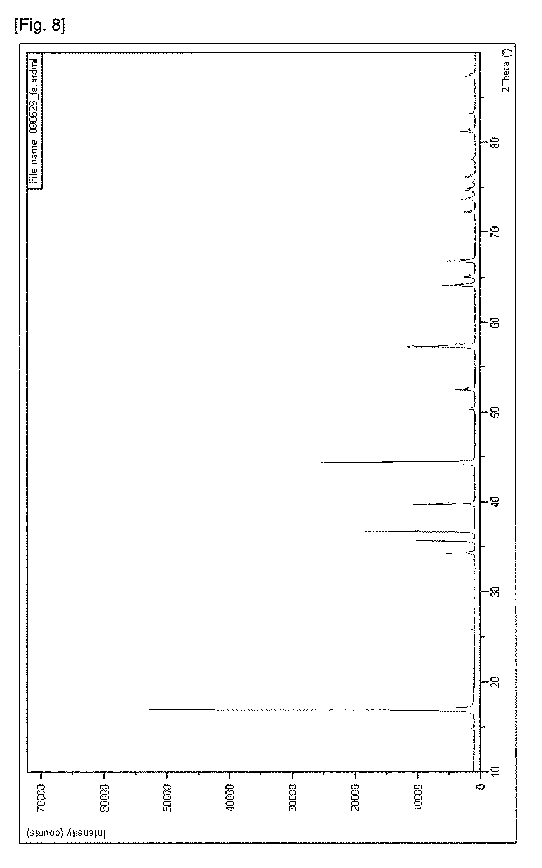

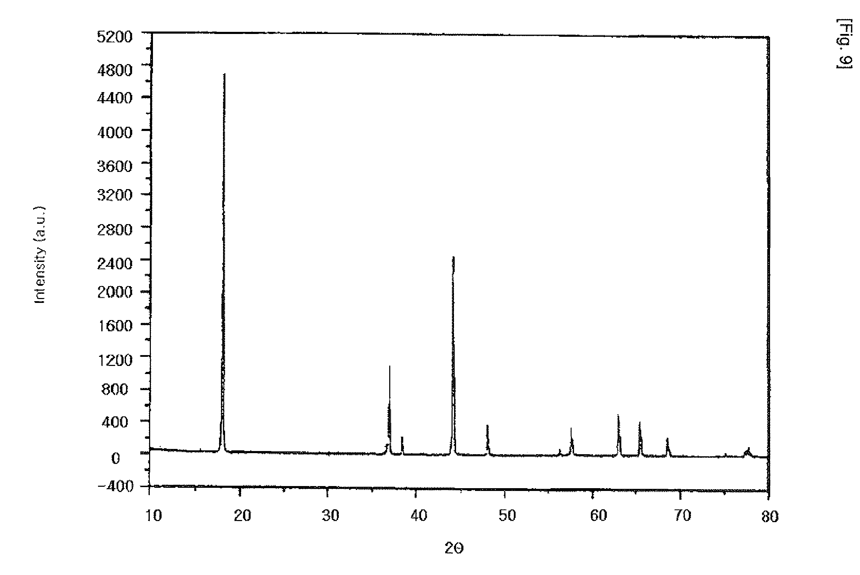

The results of measuring the XRD of the negative active materials of Examples 1 ∼ 5 and Comparative Example 1 are shown in FIGS. 4 to 9.

As shown in FIGS. 4 to 9, the negative active materials of Examples 1 ∼ 5 represented a single-phase diffraction pattern of a hexagonal R-3m crystal structure. The negative active material of Example 1 had a lattice constant of a=2.57 Å, c=14.418 Å, and a lattice constant ratio of c/a=5.61. The negative active material of Example 2 had a lattice constant of a=2.572 Å, c=14.419 Å, and a lattice constant ratio of c/a=5.606.

### Test Example 2: Evaluation of Electrochemical Properties of Battery

In order to evaluate the electrochemical properties (capacity and cycle-life) of the negative electrode including the negative active material according to the present invention, the following test was performed.

### 1. Fabrication of a Half Cell

80 wt% of the negative active material of each of Examples 1 and 2 and Comparative Examples 1 and 2, 10 wt% of a graphite conductive material, and 10 wt% of a polytetrafluoroethylene binder were mixed in an N-methylpyrrolidone solvent thus preparing a negative active material slurry. The negative active material slurry was applied on a copper foil current collector thus manufacturing a negative electrode. The manufactured negative electrode was used as a working electrode and a metal lithium foil was used as a counter electrode, and a separator formed of a porous polypropylene film was interposed between the working electrode and the counter electrode. An electrolyte obtained by dissolving 1 (mol/L) LiPF₆ in a mixture solvent of propylene carbonate (PC), diethyl carbonate (DEC) and ethylene carbonate (EC) (PC:DEC:EC = 1:1:1 volume ratio) was used, thus manufacturing a 2016 coin type half cell.

### 2. Evaluation of the Electrochemcial Properties of the Half Cell

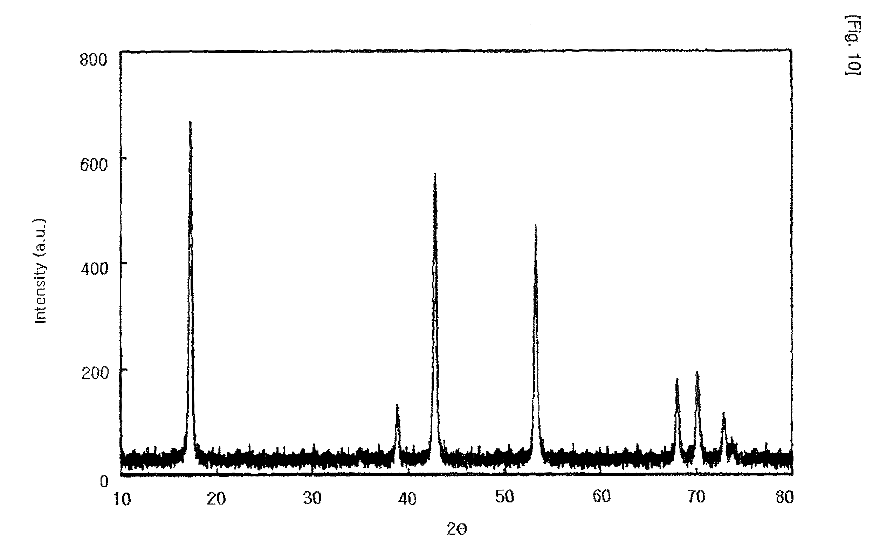

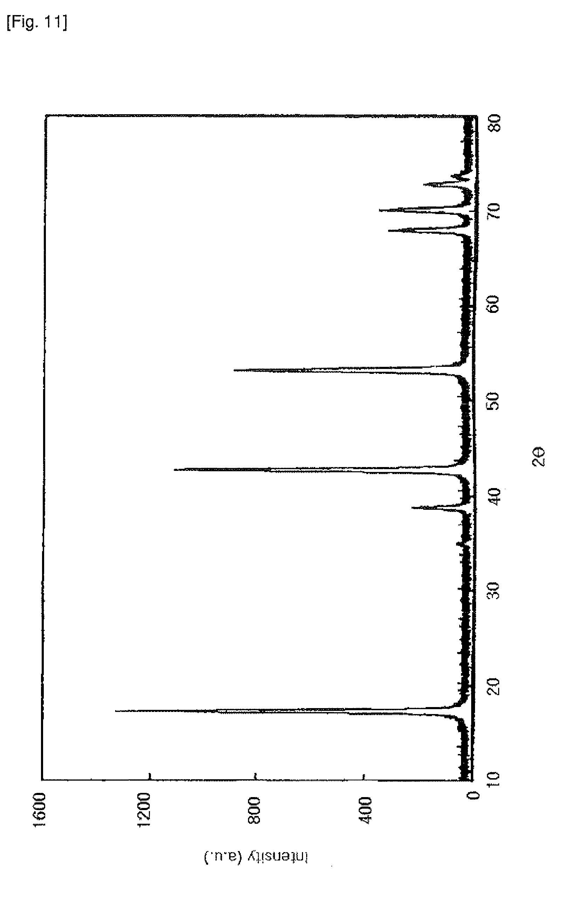

The electrochemical properties of the half cell manufactured in above 1 were evaluated under the conditions of 0.1C ↔ 0.1C (once charge · discharge) in the range of 0.01 ∼ 2.0 V. After charge · discharge, the XRD of the negative active materials of Examples 1 and 2 was measured. The results of measurement of XRD of the negative active materials of Examples 1 and 2 having intercalated lithium after charge are shown in FIGS. 10 and 11, respectively.

Also, respective lattice constants were determined from XRD in a charged state of Examples 1 and 2 as shown in FIGS. 10 and 11, and changes in volume were calculated. The results for Example 1 were a=2.681 Å, c=5.13 Å, from which the volume was increased by 13.9% compared to before charge. In Example 2, a=2.685 Å, c=5.133 Å, from which the volume was increased by 13% in volume compared to before charge.

Also, initial discharge capacity per mass and initial efficiency during charge · discharge were measured. The results are shown in Table 1 below.

**TABLE 1**

| | Initial Discharge Capacity (mAh/cc) | Initial Efficiency (%) |
|---|---|---|
| Ex. 1 | 600 | 91 |
| Ex. 2 | 610 | 91 |
| C.Ex. 1 | 570 | 85 |
| C.Ex. 2 | 570 | 94 |

As is apparent from Table 1, the battery including the negative active material of Example 1 or 2 had remarkably superior initial discharge capacity and charge · discharge efficiency compared to those of the battery including the negative active material of Comparative Example 1 or 2.

### [Industrial Applicability]

According to the present invention, a negative active material can exhibit high capacity and superior cycle-life characteristics, and thereby can be usefully employed in a lithium secondary battery which shows high capacity during high-rate charge · discharge.

## Claims

1. A negative active material for a lithium secondary battery, comprising a compound represented by Formula 1 below:
<Formula 1> Li₁₊ₓNb_{1-x-y}M_{y}O_{2+z}
wherein 0.01≤x≤0.5, 0≤y≤0.3, -0.2≤z≤0.2, and M is an element selected from the group consisting of V, Cr, Fe, Co, Ni, Cu, Zn, Zr, Mo, W, Ag, Sn, Ge, Si, Al, and combinations thereof.

2. The negative active material of claim 1, wherein the negative active material has a distance ratio (c/a axis ratio) between crystal axes before intercalation of a lithium ion (R-3m) ranging from 2.5 to 6.5.

3. The negative active material of claim 1, wherein the negative active material has a distance ratio (c/a axis ratio) between crystal axes after intercalation of a lithium ion (P-3m1) ranging from 0.3 to 3.0.

4. The negative active material of claim 1, wherein a lattice volume of the negative active material changes in a range of 30% or less by intercalation/deintercalation of a lithium ion.

5. The negative active material of claim 1, wherein the negative active material has an average oxidation number of metal Nb ranging from +3 to +5 by intercalation/deintercalation of a lithium ion.

6. The negative active material of claim 1, wherein the negative active material has a redox potential of 0.01 ∼ 1 V compared to lithium metal.

7. A method of preparing the negative active material for a lithium secondary battery of claim 1, comprising:
1) solid-phase mixing a lithium material, an Nb material and an M material, thus preparing a mixture; and
2) thermally treating the mixture in a reducing atmosphere.

8. A method of manufacturing the negative active material for a lithium secondary battery of claim 1, comprising:
1) solid-phase mixing a lithium material with an Nb material, performing primary thermal treatment in a reducing atmosphere, and then performing cooling to room temperature, thus preparing a mixture; and
2) solid-phase mixing the mixture with an M material, and performing secondary thermal treatment in a reducing atmosphere.

9. The method of claim 7 or 8, wherein the lithium material is selected from the group consisting of lithium carbonate, lithium hydroxide, lithium nitrate, lithium acetate, and combinations thereof.

10. The method of claim 7 or 8, wherein the Nb material is selected from the group consisting of Nb, oxides and hydroxides including the same, and combinations thereof.

11. The method of claim 7 or 8, wherein the M material is selected from the group consisting of a metal selected from among V, Cr, Mn, Fe, Co, Ni, Cu, Zn, Zr, Mo, W, Ag, Sn, Ge, Si, Al, and combinations thereof; oxides and hydroxides including the same; and combinations thereof.

12. The method of claim 7 or 8, wherein the reducing atmosphere is selected from the group consisting of a hydrogen atmosphere, a nitrogen atmosphere, an argon atmosphere, a N₂/H₂ mixture gas atmosphere, a CO/CO₂ mixture gas atmosphere, a helium atmosphere, and combinations thereof.

13. The method of claim 7, wherein the thermally treating is performed at 300 ∼ 1400°C.

14. The method of claim 8, wherein the primary thermal treatment is performed at 700 ∼ 900°C, and the secondary thermally treatment is performed at 700 ∼ 1400°C.

15. A lithium secondary battery, comprising:
a positive electrode including a positive active material able to intercalate and deintercalate a lithium ion;
a negative electrode including the negative active material of claim 1; and
an electrolyte.

16. The lithium secondary battery of claim 15, wherein the electrolyte is a non-aqueous electrolyte or a solid electrolyte.

17. The lithium secondary battery of claim 16, wherein the non-aqueous electrolyte is obtained by dissolving a lithium salt in a non-aqueous organic solvent.

18. The lithium secondary battery of claim 17, wherein the lithium salt is selected from the group consisting of LiPF₆, LiBF₄, LiSbF₆, LiAsF₆, LiClO₄, LiCF₃SO₃, LiC₄F₉SO₃, LiN(CF₃SO₂)₂, LiN(C₂F₅SO₂)₂, LiAlO₄, LiAlCl₄, LiN(CₚF₂ₚ₊₁SO₂)(C_{q}F_{2q+1}SO₂) (wherein p and q are a natural number), LiSO₃CF₃, LiCl, LiI, and combinations thereof.

19. The lithium secondary battery of claim 17, wherein the non-aqueous organic solvent is selected from the group consisting of a carbonate-based solvent, an ester-based solvent, an ether-based solvent, a ketone-based solvent, an alcohol-based solvent, an aprotic solvent, and combinations thereof.
